# EUROPÄISCHE PATENTSCHRIFT

(11) **EP 2 243 665 B1**
(45) Veröffentlichungstag und Bekanntmachung des Hinweises auf die Patenterteilung: **25.12.2013**
(21) Anmeldenummer: 10157487.9
(22) Anmeldetag: 24.03.2010
(51) Int. Cl.: B60R 21/36, B60R 1/12, B60R 1/06, B60R 21/013

(54) **Rückblickeinheit mit Airbag**
Rear view unit with airbag
Unité de rétroviseur dotée d'un airbag

(30) Priorität: 20.04.2009 DE 102009019090
(43) Veröffentlichungstag der Anmeldung: 27.10.2010
(73) Patentinhaber: SMR Patents S.à.r.l., 1653 Luxembourg (LU)
(72) Erfinder: Schmierer, Arne, 73230, Kirchheim (DE)
(74) Vertreter: Weber-Bruls, Dorothée

(56) Entgegenhaltungen:
- JP-A- 2009 023 600
- US-A1- 2004 182 629

## Beschreibung

Die Erfindung betrifft eine Rückblickeinheit mit den Merkmalen des Oberbegriffs des Anspruchs 1.

### STAND DER TECHNIK

Außenspiegel in Fahrzeugen unterliegen den Regelungen nach ECE R46. Diese Sicherheitsvorschriften verlangen, dass Fahrzeugaußenspiegel in und gegen die Fahrrichtung abklappbar sind, wenn sie mit einer definierten Kraft beaufschlagt werden.

Außenspiegel, die nur 15 cm Abstand von der Karosserie des Fahrzeugs haben, müssen nicht abklappbar gestaltet werden. Für Kameralösungen, die in Zukunft einen Außenspiegel ersetzen können, sind solche festen Installationen nahegelegt.

Das Ausweichen der Außenspiegel schützt die schwächeren Teilnehmer im Verkehr und reicht in den meisten Fällen aus, um Verletzungen zu reduzieren. Wofür der Außenspiegel nicht ausgelegt ist, ist ein Seitenaufprall oder ein Aufprall in einem sehr spitzen Winkel senkrecht zur Außenspiegellängsachse.

Bei den feststehenden Lösungen für die Kamera-Rückblicksysteme ist ein Schutz des Fußgängers nur über einen Aufprallschutz möglich.

Und aktiver Fußgängerschutz wird immer wichtiger; Fahrzeuge müssen den Anforderungen folgen. Die Regeln des Euro-NCAP-Programms vergeben Sterne an Fahrzeuge mit besonders ausgeprägtem Schutz für Fußgänger. Bisher wird allerdings in der Serienfertigung noch nicht sehr viel umgesetzt.

Die vorliegende Erfindung befasst sich mit dem aktiven Schutz von Verkehrsteilnehmern durch den Einsatz einer Airbagvorrichtung zum Schutz von Fußgängern, die sich im Innern eines Außenspiegels eines Fahrzeugs befindet und die einen Airbag enthält, der mit einem Befüllungsgas aufgeblasen werden kann, um den Umfang des Außenspiegels zu bedecken.

Airbagvorrichtungen zum Schutz von Fußgängern sind beispielsweise aus der DE 102008 011468 bekannt. Die Airbagvorrichtung enthält zusammengefaltete Airbags, die auf der rechten und linken Seite einer Verkleidung zum Abdecken der Vorderflächen von vorderen Säulen eines Fahrzeugs bei der Entfaltung untergebracht sind.

In Fahrzeugen sind vorhandene Airbagmodule meist hinter Innenverkleidungsteilen, wie z. B. einer Instrumententafel oder Säulenverkleidungen angeordnet. Um ein Austreten des Airbags im Gebrauchsfall sicherzustellen, sind in den Innenverkleidungsteilen Austrittsöffnungen integriert. Diese sind meist in Form von Abdeckklappen ausgeführt, die je nach Airbag in verschiedenen Stückzahlen vorhanden sein können.

Ein üblich verwendetes Flachmaterial der Innenverkleidungsteile ist aus folgenden Schichten aufgebaut: nach außen, Richtung Fahrzeuginnenraum, eine die Sichtfläche ausbildende Slushhaut als Deckschicht, darunter liegend ein Schaum und formgebend und stabilisierend für das Flachmaterial eine Trägerschicht als Trägerteil. Die für die im Gebrauchsfall des Airbags zu bildende Austrittsöffnung benötigten Abdeckklappen sind durch eine rückseitig in die Innenverkleidungsteile eingebrachte Schwächung in Trägerteil und Schaum ausgeführt.

Durch die Aktivierung des Airbags werden die Abdeckklappen an vordefinierten Klappachsen geöffnet und geben eine Austrittsöffnung für den Airbag frei, so dass eine ungehinderte Entfaltung des Airbags gewährleistet ist. Die für eine kontrollierte Öffnung der Abdeckklappen benötigten Klappachsen werden durch die in das Trägerteil und den Schaum eingebrachten Schwächungen vorgegeben. Bei einem System mit mehreren Abdeckklappen ist im Angrenzungsbereich der Abdeckklappen eine Sollaufreißlinie in das Flachmaterial eingebracht, um auch in diesem Bereich eine kontrollierte, definierte und reproduzierbare Öffnung der Abdeckklappen gewährleisten zu können. Entlang der Sollaufreißlinie ist das Trägerteil und der Schaum ebenfalls geschwächt.

Die bei der Aktivierung des Airbags auftretenden Kräfte, die gleichzeitig das Öffnen der Abdeckklappen bewirken, können zu einer Ablösung von einzelnen Teilen des Trägerteiles und/oder des Schaums führen. Diese können mit dem sich aufblasenden Airbag in Richtung Fahrzeuginnenraum respektive in Richtung Fahrzeuginsassen geschleudert werden. Dieser Vorgang stellt eine potentielle Gefahr für die Fahrzeuginsassen dar.

Um dies zu vermeiden, werden bekannterweise (WO 99/61288) Gewebelagen in die Slushhaut in den Bereichen der Abdeckklappen eingearbeitet.

Aus der JP 2009023600 ist ein Airbag in einem Außenspiegel bekannt. Der Airbag tritt an einer Sollaufreißkante entlang der Abdeckung des Spiegelkopfes aus. Der Airbag entfaltet sich dabei entlang der A-Säule und der Frontscheibe bzw. Motorhaube des Fahrzeugs.

Die erfindungsgemäße Rückblickeinheit weist einen Bereich auf, der, wie aus dem Fahrzeuginnenraum bekannt, Sollaufreißlinien besitzt, an denen entlang die Rückblickeinheit aufreißt und der Airbag austritt. Die Sollbruchlinie erstreckt sich dabei im Rahmen des Außenspiegels ,des Kameragehäuses oder entlang eines Blinkermoduls.

Im Gegensatz zum Stand der Technik ist die Gefahr durch abgesprengte Teile beim Airbag im Außenspiegel geringer. Trotzdem versucht die Erfindung es zu vermeiden, dass Teile des Außenspiegels herumfliegen.

Der Airbag für den Außenspiegel oder für die Kamera ist vorteilhafterweise so aufgebaut, dass er den Spiegel zur Gänze umhüllt und nicht nur nach einer Seite ein Prallsack austritt. Der Vorteil des Schutzes von Fußgängern und schwächeren Verkehrsteilnehmern ist klar zu erkennen.

### Beschreibung der Erfindung

Die Erfindung ist in den Zeichnungen dargestellt und in der nachfolgenden Beschreibung näher erläutert.
- Fig. 1: zeigt einen beispielhaften Außenspiegel im Längsschnitt;
- Fig. 2: zeigt einen Außenspiegel mit Blinker im Querschnitt;
- Fig. 3: zeigt ein Randstück des Außenspiegels im Querschnitt;
- Fig. 4: zeigt eine detaillierte Schnittansicht eines Blinkermoduls;
- Fig. 5: zeigt zwei perspektivische Draufsichten eines Außenspiegels mit Sollbruchstellen;

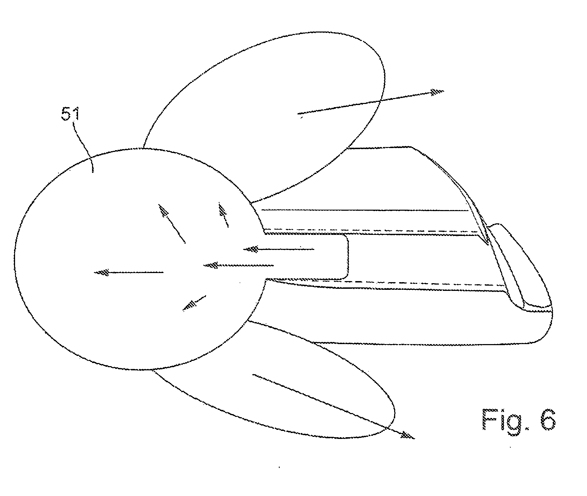

- Fig. 6: zeigt eine Draufsicht eines Außenspiegels mit Sollbruchstellen mit sich entfaltendem Airbag;
- Fig. 7: zeigt eine Draufsicht auf eine Kameraeinheit.

Als beispielhafte Ausführung für die Rückblickeinheit 1 ist ein Außenspiegel 1 gewählt worden. Die erfindungsgemäßen Ausführungsformen lassen sich auch auf eine Rückblickeinheit 1 mit einem Kameramodul erstrecken. Dabei wird die Kamera in ein Kameragehäuse eingebracht und mit einem Gehäusefuß am Fahrzeug montiert.

Da eine Kameralösung im Vergleich zum Anbau eines Außenspiegels sehr klein gestaltet werden kann, kann der Airbag auch nur klein dimensioniert sein, da ansonsten nicht genügend Hüllenmaterial im Gehäuse gefaltet werden kann. Allerdings ist auch für den passiven Schutz kein großer Airbag notwendig.

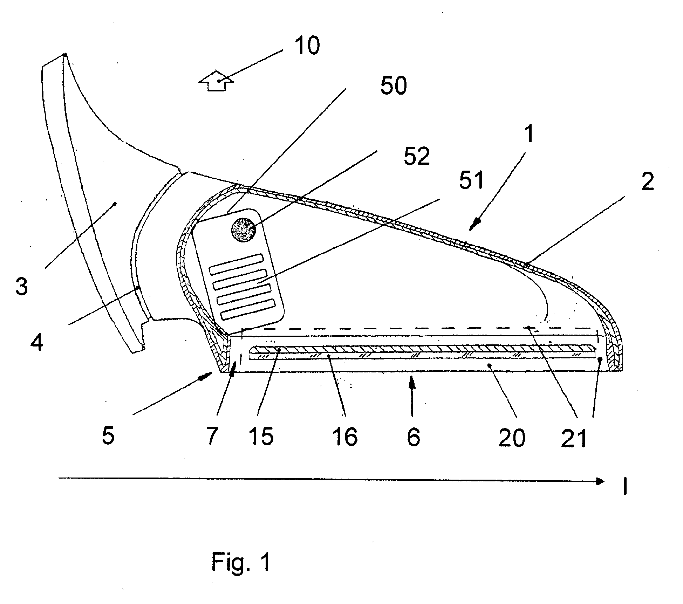

Fig. 1 zeigt einen Längsschnitt eines Außenspiegels 1 eines Kraftfahrzeuges mit bewegbaren Teilen des Randbereichs 5 des Spiegelgehäuses 2. Der Außenspiegel 1 hat einen an der Karosserie des Fahrzeuges zu befestigenden Spiegelfuß 3, an dem das in und entgegen der Fahrtrichtung 10 schwenkbare Spiegelgehäuse 2 gelagert ist. Zwischen dem Spiegelfuß 3 und dem Spiegelgehäuse 2 ist eine Trennfuge 4 vorgesehen, die den nötigen Freiraum für ein einwandfreies und ungehindertes Schwenken des Spiegelgehäuses 2 ermöglicht. In der Figur 1 ist die Längsachse 1 des Außenspiegels 1 eingezeichnet.

Das Spiegelgehäuse 2 hat eine Öffnung, die im Wesentlichen durch ein Spiegelglas 16 verschlossen wird. Zwischen dem Spiegelglas 16 und der Innenseite eines Randbereiches 5 des Spiegelgehäuses 2 ist ein schmaler umlaufender Spalt 7 vorgesehen, der es ermöglicht, dass das Spiegelglas 16 ungehindert in vertikaler und in horizontaler Richtung verschwenkt werden kann.

Im Inneren des Spiegelgehäuses 2 ist ein Gehäuse 50 mit einem zusammengefalteten Airbag 51 und einer Gasausblasvorrichtung 52 eingebaut. Die Größe, die Form und Anbaurichtung der Airbageinrichtung wird an das jeweilige Spiegeldesign angepasst und ist in der Figur 1 nur exemplarisch dargestellt.

Im oberen, im unteren und im karosseriefernen Teil des Randbereiches 5 sind bewegbare bzw. herauslösbare Teilbereiche 20 im Spiegelgehäuse 2 vorgesehen. Sie werden zum Spiegelgehäuse 2 hin durch eine Trennlinie 21 begrenzt.

Im Falle eines Auslösens des Airbags 51 wird dieser Teil des Randbereiches 5 vollständig vom Spiegelgehäuse 2 gelöst. Der Randbereich 5 kann einstückig aus dem Spiegelgehäuse 2 herausgeformt sein. Es ist auch möglich, den Randbereich 5 durch einen separaten, angesetzten Spiegelrahmen zu bilden. Bei einer solchen Ausführungsform bliebe das Spiegelglas 16 in der Öffnung des Spiegelgehäuses 2 installiert und würde nicht abgesprengt werden, um Verletzungen zu vermeiden. Der Airbag 51 entfaltet sich aus dem Randbereich 5 des Spiegelgehäuses 2 und umhüllt Spiegelglas 16 und Spiegelgehäuse 2 sowohl in als auch entgegen die Fahrtrichtung 10. Dazu muss der Airbag 51 so positioniert sein, dass der sich entfaltende Luftsack an einem im Außenspiegel 1 befindlichen Spiegelglasträger 15 mit einem Glasverstellmotor und an dem Spiegelglas 16 vorbei ausbreiten kann.

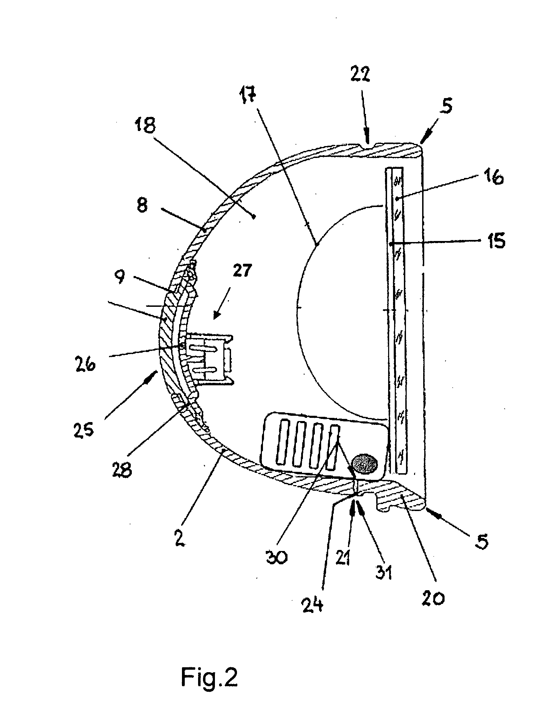

Der bewegbare Teil des Randbereiches 5 ist in Fig. 2 durch eine gestrichelte Trennlinie 21 angedeutet. Längs dieser Trennlinie 21 kann ein Teil 20 des Randbereiches 5 aus dem Spiegelgehäuse 2 herausgelöst werden.

In einer anderen Ausführungsform wird das Spiegelglas 16 aus dem Spiegelgehäuse 2 gesprengt. Bei der Verwendung von Plastikglas besteht dabei nur einen geringe Verletzungsgefahr.

Wie Fig. 2 zeigt, sitzt das Spiegelglas 16 auf einem Spiegelglasträger 15, der mittels eines Verstellantriebes 17 in bekannter Weise verstellt werden kann. Das Spiegelgehäuse 2 hat eine in Fahrtrichtung 10 nach vorne weisende Rückwand 8, die im Querschnitt konkav gekrümmt ist. Das Spiegelgehäuse 2 kann geschlossen sein oder eine Öffnung 9 aufweisen, in die eine Wiederholblinkleuchte 25 eingesetzt werden kann. Sie hat eine Lichtscheibe 26, die mit einem in der Dicke verringerten Rand 28 an der Innenseite der Rückwand 8 befestigt ist. Die Lichtscheibe 26 schließt mit ihrer Außenseite vorteilhaft bündig mit der Außenseite der Rückwand 8. Die Lichtscheibe 26 ist Teil eines Leuchtengehäuses 27, das innerhalb des Innenraumes 18 des Spiegelgehäuses 2 liegt.

Das Spiegelgehäuse 2 ist an seiner Oberseite nahe dem Randbereich 5 mit einer Wasserablaufrinne 22 versehen. In Fig. 2 ist gegenüberliegend ein Teilbereich 20 des Randbereiches 5 dargestellt, der über eine Sollbruchstelle 31 mit dem restlichen Teil des Spiegelgehäuses 2 verbunden ist. Die Sollbruchstelle 31 verläuft längs der Trennlinie 21 und ist an der Innenseite des Spiegelgehäuses 2 vorgesehen, so dass sie von außen nicht sichtbar ist. Die Sollbruchstelle 31 wird dadurch gebildet, dass der Teilbereich 20 über einen dünnen Steg 24 mit dem Spiegelgehäuse 2 verbunden ist. Im Bereich des Steges 24 ist zwischen dem Teilbereich 20 und dem Spiegelgehäuse 2 ein Spalt 30 vorgesehen.

Die Airbageinrichtung ist in diesem Ausführungsbeispiel auf der Spiegelträgerplatte 15 installiert. Ziel ist es, bei einer Gefahrensituation das gesamte Spiegelgehäuse 2 vom Rest des Außenspiegels 1 zu trennen. Die Sprengladung des Airbags 51 sprengt das Spiegelgehäuse 2 an der Sollbruchstelle 31 ab, wobei die Wasserablaufrinne 22 als Scharnierlinie dient. Dadurch bleibt das Spiegelgehäuse 2 mit dem Außenspiegel 1 verbunden und fliegt nicht unkontrolliert herum.

Hier kommen auch Ausführungen zum Einsatz, die flexible Gewebe wie im Stand der Technik verwenden.

In einer weiteren Ausführungsform wird das Spiegelgehäuse 2 auch an der Wasserablaufrinne 22 vollständig vom Rest des Außenspiegels 1 getrennt.

Das vollständige Absprengen des Spiegelgehäuses 2 ist in diesem Ausführungsbeispiel keine Gefahr, da die Verkabelung, die den Blinker an das elektrische System des Fahrzeugs anschließt, die abgesprengten Bauteile auffängt.

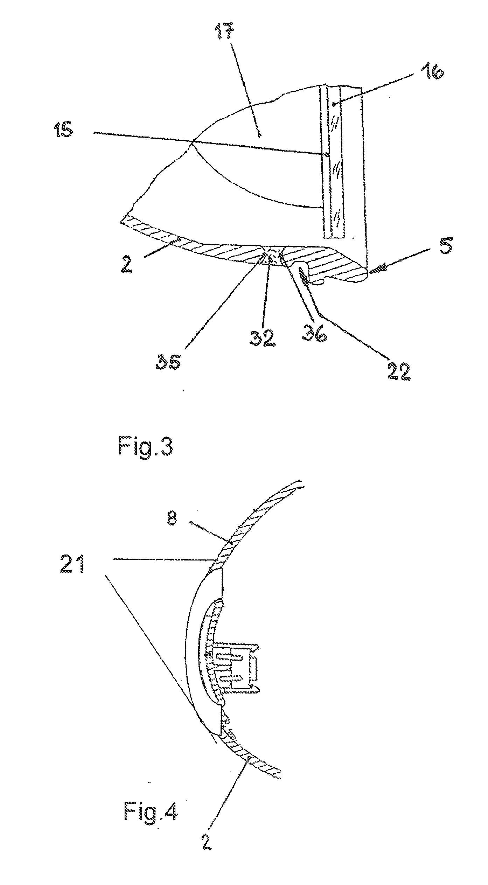

Bei der Ausführungsform nach Fig. 3 ist der Randbereich 5 mittels einer elastomeren Zwischenschicht 32 an das Spiegelgehäuse 2 angebunden. Entsprechend der vorigen Ausführungsform kann dieser Randbereich 5 als umlaufender Rahmen ausgebildet sein, der über die elastomere Zwischenschicht 32 an das Spiegelgehäuse 2 angebunden ist. Wie bei der vorigen Ausführungsform können auch nur ein oder mehrere Teilbereiche des Randbereiches 5 über diese elastomere Zwischenschicht 32 mit dem Spiegelgehäuse 2 verbunden sein. Die einander zugewandten Ränder 35, 36 des Spiegelgehäuses 2 und des Randbereiches 5 sind jeweils im Querschnitt konvex gekrümmt. Dadurch wird eine zuverlässige Verbindung des Randbereiches 5 über die Zwischenschicht 32 mit dem Spiegelgehäuse 2 erreicht. Die Zwischenschicht 32 hat eine solche Dicke, dass sie im Übergangsbereich zwischen dem Spiegelgehäuse 2 und dem Randbereich 5 einen stetigen Übergang bildet. Dadurch sind sowohl die Innen- als auch die Außenseite des Spiegelgehäuses 2 im Bereich der Zwischenschicht 32 nicht mit einem Absatz versehen, sondern die Innen- und die Außenseite der Zwischenschicht 32 bildet eine stetige Fortsetzung der Innen- bzw. Außenseite des Spiegelgehäuses 2 und des Randbereiches 5.

Fig. 4 zeigt eine Ausführungsform mit einem Blinker wie in Fig. 2. Das Blinkermodul erstreckt sich von der fahrzeugfernen Seite entlang der Außenkontur der Rückwand 8. Das Blinkermodul ist dabei so aufgebaut, dass das Modul über Steckverbindungen oder Klipse mit dem Spiegelgehäuse 2 verbunden ist. Wenn der Airbag 51 ausgelöst wird, wird das Blinkermodul aus dem Spiegelgehäuse 2 gesprengt und der Airbag 51 kann sich durch die entstandene Öffnung ausbreiten. Das abgesprengte Blinkermodul wird über die elektrischen Anschlüsse abgefangen und am freien Herumfliegen gehindert. Die Anbaulinien des Blinkermoduls und das Spiegelgehäuse 2 bilden somit die Sollbruchlinien, die beim Auslösen des Airbags 51 aufgebrochen werden. Durch das Aufbrechen des Spiegelgehäuses 2 entlang des Blinkermoduls entsteht eine ausreichend große Öffnung, um den Luftsack austreten zu lassen. Die Austrittsöffnung erstreckt sich entlang des Spiegelgehäuses 2 mit einer Öffnungsbreite, die der Bauhöhe des Blinkermoduls entspricht. Die Absprengbewegung beginnt am fahrzeugfernen Ende des Außenspiegels 1, so dass das Blinkermodul in Richtung Fahrzeug herausgebrochen wird. Dadurch bleibt auch die Verkabelung, die sich normalerweise am fahrzeugnahen Ende des Blinkermoduls befindet, erhalten und kann das Blinkermodul auffangen.

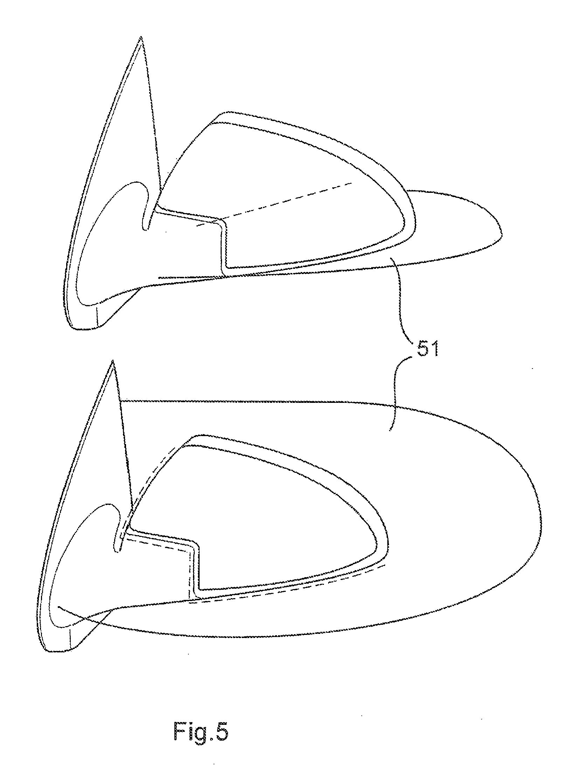

Fig. 5 zeigt ein Beispiel eines Spiegelgehäuses 2 gegen die Fahrtrichtung 16 gesehen. Die weiße Linie markiert eine Sollbruchstelle, die von außen unsichtbar im Spiegelgehäuse 2 verläuft. Das Spiegelgehäuse 2 selbst ist in diesem Beispiel auf einem Spiegelrahmen und eine Spiegelfußverkleidung aufgesetzt. Diese Verbindung kann auch abreißbar oder flexibel gestaltet sein. Besonders vorteilhaft ist dabei einen Ausführungsform, die einen sogenannten Skalp als Spiegelgehäuse verwendet. Diese dekorative Abdeckung steht ein austauschbares Aufstecksteil dar, das in das Spiegelgehäuse 2 gesteckt wird. Der Skalp kann mit oder ohne Beleuchtungsmittel gestaltet sein.

Die erfindungsgemäße Lösung für einen Fußgänger Airbag 51 im Außenspiegel 1 muss keinen flächenhafte Entfaltung des Airbags 51 gewährleisten. Vielmehr soll der Außenspiegel 1 mit einer beliebig geformten Luftsack umhüllt sein. Es geht darum, beide Seiten der Rückblickvorrichtung, vorwärts und rückwärts mit einem Aufprallschutz zu versehen

Die Airbageinrichtung zum Schutz von Fußgängern nach der Erfindung ist so angepasst, dass sie innerhalb des Außenspiegels 1 unter einer Verkleidung befestigt wird. Die Airbageinrichtung enthält einen Airbag-Satz, der mit Befüllungsgas befüllt werden kann, um die Rückseite des Außenspiegels 1 und seine Vorderseite zu bedecken, eine Aufblasvorrichtung zum Zuführen von Befüllungsgas in den Airbag 51 und einen Behälter, in dem die Aufblasvorrichtung und der Airbag 51 im zusammengefalteten Zustand untergebracht sind. Die Aufblasvorrichtung ist so aufgebaut, dass die Austrittsrichtung des Befüllungsgases, das in den Airbag 51 im Inneren des Spiegelgehäuses 2 eingespeist wird, sich im Allgemeinen parallel zur Ausrichtung des Außenspiegels 1 nach außen, erstreckt. Das Gehäuse 50 des Airbags 51 enthält eine Rückwand 8, die als Öffnungswand dient, die das Hervortreten des Airbags 51 ermöglicht. Bei der Betätigung der oben genannten Airbageinrichtung füllt sich der Airbag 51 mit Befüllungsgas, das von der Aufblasvorrichtung zugeführt wird, tritt aus dem Gehäuse heraus und entfaltet sich dann, um den Außenspiegel 1 zu bedecken.

Die Aufblasvorrichtung ist so aufgebaut, dass ihre Austrittsrichtung von Befüllungsgas zum Airbag 51 im Inneren des Spiegelgehäuses 2 im Allgemeinen parallel zur Spiegellängsachse 1 verläuft.

Folglich lässt im Anfangszustand der Airbagentfaltung das Spiegelgehäuse 2 den Airbag 51 entlang der Kontur des Außenspiegels 1 entfalten.

Somit ist die Airbagvorrichtung zum Schutz von Fußgängern im Außenspiegel 1 in der Lage, die Airbags 51 auf stabile Weise und mit einer einfachen Struktur schnell zu entfalten, um den gesamten Außenspiegel 1 zu bedecken.

Es ist außerdem möglich, dass der Airbag 51 einen Balg-gefalteten Bereich enthält, der in der Richtung von vorne nach hinten in der Art eines Balges gefaltet ist, und dass der Balggefaltete Bereich eine solche Länge hat, die ermöglicht, dass sich der nach innen gerollte Bereich bei der Entfaltung des Airbags 51 über Außenspiegel 1 legen kann.

Zur Auslösung des Airbags 51 gibt es im Stand der Technik beschrieben Methoden. Airbags werden mit Hilfe von Sensorendaten ausgelöst, wobei gängige Sensoren Verzögerungen des Fahrzeugs messen. Eine solche Methode ist für das Auslösen eines Außenairbag eher ungeeignet.

Für einen Airbag 51 im Außenspiegel 1 bietet es sich an, das Auslösen von einer gemessenen Annäherung abhängig zu machen. Hier werden Ultraschall, Radar oder optische Signale auswerten.

Das Auslösen erfolgt nicht durch einen Verzögerung des Fahrzeugs sondern durch die Annäherung von der Fahrzeugseite. Damit der Airbag 51 nicht bei jedem vorbeifahrenden Fahrrad ausgelöst wird, muss der Auslösemechanismus intelligent gestaltet sein.

Hier bieten sich ein Kamerasystem an, das sowohl im Außenspiegel 1 selbst als auch am Fahrzeug befestigt sein kann. Die Kamera detektiert ein sich näherndes Objekt und die verarbeitende Software wertet die Bilder aus. Dabei wird das Objekt nach seine Gefährlichkeit klassifiziert und die Geschwindigkeit der Annäherung bestimmt.

Eine vorteilhafte Ausführungsform des Auslösungssystems löst den Airbag 51 nur nach einer Objekterkennung einen Fußgängers, Motorrad- oder Fahrradfahrers aus. Ein Seitenaufprall durch ein größeres Objekt löst den Airbag 51 nicht aus.

Eine vorteilhafte Ausführung der Auslösesoftware wertet zusätzliche Parameter des Fahrzeugs aus, wie auf dem Fahrzeug -Bussystem zur Verfügung stehen. Das wird im Allgemeinen ein CAN-Bus, ein LIN- Bus oder ein ähnlicher Bus sein. Diese Daten dienen zur Verfeinerung der Auslösesoftware.

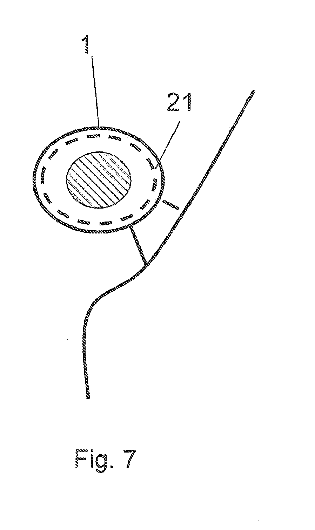

Alle genannten Varianten der Ausführung lassen sich auf eine Rückblickeinheit mit einer Kamera ausweiten. Auch eine solche Rückblickeinheit steht, wie in Figur 7 dargestellt, über die äußere Kontur des Fahrzeugs hinaus und wird gegebenenfalls zur Gefahr für Fußgänger.

Auch hier ist der Schutz durch Auslösung eines Airbags 51 zu begrüßen. Die Sollbruchstelle 21 entlang der Kontur des Gehäuses erlaubt den Austritt des Airbags 51 rund um den Kamerasensor, der in der Mitte dargestellt ist. Die Gestaltung des Airbag 51 ist dabei so, dass die Rückblickeinheit in Fahrtrichtung 10 und gegen die Fahrtrichtung 10 verhüllt ist.

Vorteilhaft ist dabei, dass bei einer Rückblickkamera, die Sensoren nicht getrennt eingebaut oder angeschlossen werden müssen. Bei einem geeigneten Blickwinkel der Kamera oder eines Teilbereichs der Kamera ist einen Auslösung des Airbags direkt nach der Erfassung der Bilddaten möglich.

## Patentansprüche

1. Rückblickeinheit (1) die Befestigungsmittel zur Befestigung an einem Fahrzeug und wenigsten eine Öffnung zur Aufnahme eines reflektierenden Elements (16) oder einer Kamera aufweist wobei die Rückblickeinheit eine Airbageinrichtung (50, 51, 52) enthält, **dadurch gekennzeichnet, dass** mindestens eine Sollbruchstelle (21, 31) in der Längsrichtung (I) der Rückblickeinheit (1) verläuft, und die Airbageinrichtung (50, 51, 52) so gestaltet ist, dass der austretende Airbag (51) die Rückblickeinheit (1) in Fahrt- und gegen die Fahrtrichtung (10) umhüllt.

2. Rückblickeinheit (1) nach Anspruch 1 **dadurch gekennzeichnet, dass** die mindestens eine Sollbruchstelle (21, 31) entlang eines Randbereichs (5) verläuft.

3. Rückblickeinheit (1) nach Anspruch 1 **dadurch gekennzeichnet, dass** die mindestens eine Sollbruchstelle (21, 31) so verläuft, dass das reflektierende Elements (16) aus einem Spiegelgehäuse (2) gesprengt wird.

4. Rückblickeinheit (1) nach Anspruch 1 **dadurch gekennzeichnet, dass** die mindestens eine Sollbruchstelle (21, 31) entlang der Kontur eines Blinkermoduls (25) verläuft.

5. Rückblickeinheit (1) nach Anspruch 1 **dadurch gekennzeichnet, dass** die mindestens eine Sollbruchstelle (21, 31) aus einer Verringerung der Materialstärke besteht.

6. Rückblickeinheit (1) nach Anspruch 1 **dadurch gekennzeichnet, dass** die mindestens eine Sollbruchstelle (21, 31) aus einem elastischen Material besteht.

7. Rückblickeinheit (1) nach Anspruch 1 **dadurch gekennzeichnet, dass** ein Airbag (51) sich entlang der Längsrichtung der Rückblickeinheit (1) entfaltet.

8. Rückblickeinheit (1) nach Anspruch 1 **dadurch gekennzeichnet, dass** der Airbag (51) sich senkrecht zu Längsrichtung der Rückblickeinheit (1) entfaltet

9. Rückblickeinheit (1) nach Anspruch 1 **dadurch gekennzeichnet, dass** der Airbag (51) durch Steuerung ausgelöst wird, die eine Annäherung von Objekten auswertet.

## Claims

1. A rear view unit (1) having attachment means for attachment to a vehicle and at least one opening for receiving a reflective element (16) or a camera, wherein the rear view unit contains an airbag device (50, 51, 52), **characterized in that** at least one predetermined breaking point (21, 31) extends in the longitudinal direction (1) of the rear view unit (1) and the airbag device (50, 51, 52) is designed such that the airbag (51) encloses the rear view unit (1) in the direction of travel and in the opposite direction (10) when leaving it.

2. The rear view unit (1) according to claim 1, **characterized in that** the at least one predetermined breaking point (21, 31) extends along a peripheral region (5).

3. The rear view unit (1) according to claim 1, **characterized in that** the at least one predetermined breaking point (21, 31) extends such that the reflective element (16) is blown out of a mirror housing (2).

4. The rear view unit (1) according to claim 1, **characterized in that** the at least one predetermined breaking point (21, 31) extends along the contour of an indicator module (25).

5. The rear view unit (1) according to claim 1, **characterized in that** the at least one predetermined breaking point (21, 31) consists of a reduced material thickness.

6. The rear view unit (1) according to claim 1, **characterized in that** the at least one predetermined breaking point (21, 31) consists of an elastic material.

7. The rear view unit (1) according to claim 1, **characterized in that** an airbag (51) unfolds along the longitudinal direction of the rear view unit (1).

8. The rear view unit (1) according to claim 1, **characterized in that** the airbag (51) unfolds in a direction perpendicular to the longitudinal direction of the rear view unit (1).

9. The rear view unit (1) according to claim 1, **characterized in that** the airbag (51) is triggered by a control which analyzes an approach of objects.

## Revendications

1. Unité de rétroviseur (1) comprenant des moyens de fixation pour une fixation sur un véhicule, et au moins une ouverture destinée à recevoir un élément réflecteur (16) ou une caméra, de sorte que l'unité de rétroviseur comprend un dispositif de coussin d'air (50, 51, 52), **caractérisée en ce qu'**au moins un point de rupture (21, 31) s'étend dans la direction longitudinale (I) de l'unité de rétroviseur (1), et le dispositif de coussin d'air (50, 51, 52) est conçu de telle sorte que le coussin d'air sortant (51) enveloppe l'unité de rétroviseur (1) dans la direction de déplacement, et la direction (10) inverse à celle-ci.

2. Unité de rétroviseur (1) selon la revendication 1, **caractérisée en ce que** le au moins un point de rupture (21, 31) s'étend le long d'une zone de bordure (5).

3. Unité de rétroviseur (1) selon la revendication 1, **caractérisée en ce que** le au moins un point de rupture (21, 31) s'étend de telle sorte que l'élément réflecteur (16) va jaillir du boîtier de rétroviseur.

4. Unité de rétroviseur (1) selon la revendication 1, **caractérisée en ce que** le au moins un point de rupture (21, 31) s'étend le long d'un module de clignotant (25).

5. Unité de rétroviseur (1) selon la revendication 1, **caractérisée en ce que** le au moins un point de rupture (21, 31) est constitué d'une réduction de l'épaisseur du matériau.

6. Unité de rétroviseur (1) selon la revendication 1, **caractérisée en ce que** le au moins un point de rupture (21, 31) se compose d'un matériau élastique.

7. Unité de rétroviseur (1) selon la revendication 1, **caractérisée en ce qu'**un coussin d'air (51) se déploie dans la direction longitudinale de l'unité de rétroviseur (1).

8. Unité de rétroviseur (1) selon la revendication 1, **caractérisée en ce que** le coussin d'air (51) se déploie perpendiculairement à la direction longitudinale de l'unité de rétroviseur (1).

9. Unité de rétroviseur (1) selon la revendication 1, **caractérisée en ce que** le coussin d'air (51) va être déclenché par une commande, qui détecte des objets qui se approchent.
